# EUROPEAN PATENT APPLICATION

(11) **EP 3 501 297 A1**
(43) Date of publication of application: **26.06.2019**
(21) Application number: 17209546.5
(22) Date of filing: 21.12.2017
(51) Int. Cl.: A23P 10/25, A23K 40/25

(54) **A METHOD FOR PREVENTING HEAVY METAL IN AN EXTRUDED FEED OR FOOD**

(71) Applicant: Graintec A/S, 7100 Vejle (DK)
(72) Inventor: Holgersen, Klaus, 7100 Vejle (DK)
(74) Representative: Plougmann Vingtoft a/s

(57) **Abstract**

The present invention relates to an apparatus and method for preventing heavy metal addition by addition of liquid water to powdery substance, slurry, melt, and/or dough to be extruded into feed or food pellets. The invention also relates to a method of producing feed or food pellets from a powdery substance, slurry, melt, and/or dough in which addition of heavy metal originating from tap water is mitigated.

## Description

### FIELD OF THE INVENTION

The present invention relates to an apparatus and method for preventing heavy metal addition by addition of liquid water to powdery substance, slurry, melt, and/or dough to be extruded into feed or food pellets. The invention also relates to a method of producing feed or food pellets from a powdery substance, slurry, melt, and/or dough in which addition of heavy metal originating from tap water is mitigated.

### BACKGROUND OF THE INVENTION

A lot of feed and food products are produced by use of an extruder. The production method for extruded feed/food often contains the following main unit operations:
1) Dry material batching
2) Grinding
3) Mixing
4) Extrusion
5) Drying
6) Coating/enrobing
7) Cooling

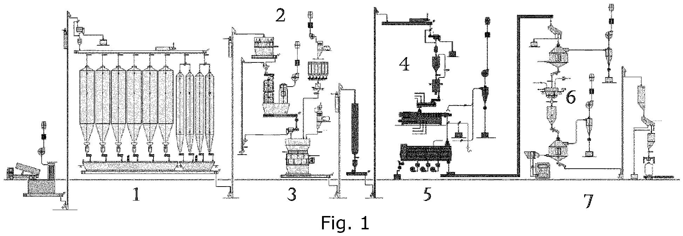

A typical example on such a production method is illustrated in fig. 1. With reference to fig. 1, the raw materials are batched and grinded in a hammer mill or pulveriser. The batch is subsequently blended in a mixer where, in some situations, liquids are added. The dry powder is extruded in a single or twin screw extruder. In the extruder (preconditioner and extruder barrel) water and steam are added. By adding thermal and mechanical energy to the substances in the extruder the temperature and pressure increases, the extrudate will melt and starch gelatinization, protein denaturation and other chemical reactions will take place, and when the product passes the die at the end of the extruder, the temperature will drop together with steam evaporation from the pellet (flash off). The shape of the product has now been formed (pellets) and the product is to be dried in a hot air dryer.

Steam is added to raw materials in a preconditioner to raise the temperature of the raw materials to 90 - 98°C; steam may also be added to the extruder barrel as well. The liquid water (often tap water) will be added to the preconditioner and/or the extruder barrel.

The amount of water in the extrudate immediately upstream of the die (Water At Die) varies between 18 - 32%, typically between 22% - 28%. The added water/steam ratio varies between 0.1 - 3.5.

The extruded product is dried in a dryer to a moisture content of 5-12%.

In some areas, the tap water contains too high levels of toxic components, such as heavy metals and the addition of such water to the raw materials will clearly pollute the end product, resulting a highly undesired end product.

Hence, an improved apparatus and method would be advantageous, and in particular a more efficient, such as a cost efficient apparatus, apparatus and method would be advantageous according to which the addition of pollutants are mitigated or at least minimized.

### OBJECT OF THE INVENTION

It is a further object of the present invention to provide an alternative to the prior art. In particular, it may be seen as an object of the present invention to provide an apparatus and method that solves the above mentioned problems of the prior art.

### SUMMARY OF THE INVENTION

Thus, the above described object and several other objects are intended to be obtained in a first aspect of the invention by providing an apparatus for preventing heavy metal addition by addition of liquid water to powdery substance, slurry, melt, and/or dough to be extruded into feed and/or food pellets, the apparatus comprises:
- an extruder (1) forming pellets by extruding a powdery substance, slurry, melt, and/or dough through a die system using elevated pressure and heat;
- a dryer (3) arranged to receive extruded pellets from the extruder (1) and configured for subjecting the received extruded pellet to drying by air thereby providing exhaust air (4) carrying the water removed from the pellets during the drying process;
- a heat exchanger system (H1, H2) arranged to receive
   - said exhaust air (4)
   - a cooling fluid (5)
   and being configured to exchange heat between the exhaust air and the cooling fluid (5) to condense water vapour in the exhaust air thereby providing a condensate (6),
   - a fluid connection for feeding said condensate (6) to said powdery substance, slurry, melt, and/or dough prior to extrusion.

In preferred embodiments, the elevated pressure and heat are present in the extruder.

In this new invention the exhaust air from the dryer and in some embodiments the flash off air (9), will be condensed in a heat exchanger system thereby providing a condensate. The condensate is used as liquid water in the extruder; thus a recirculation of water is produced in which water fed to the extruder is condensed and reused as liquid water in the extruder. Thus, if no other source of water is added to the device according to the invention, no continuously addition of contaminated water is made.

Accordingly, the contamination of e.g. heavy metals from the tap water fed directly into the extrusion system in known system may no longer occur by use of the present invention.

In some embodiments, water will be added to the device as steam from a boiler (to heat the raw materials in the extruder and/or preconditioner). However, the amount of water used for this purpose may be of an amount so that a cleaning of this water (to remove pollutions) is feasible and this amount of liquid water additionally added to the extrusion process may preferably be added as steam from the boiler.

The liquid water/steam ratio will be balanced to ensure that the liquid water addition in the extruder is smaller than or equal to the amount of condensate provided

In a second aspect, the invention relates to a method for preventing heavy metal addition by addition of liquid water to powdery substance, slurry, melt, and/or dough to be extruded into feed or food pellets, the method comprises:
- forming pellet by extruding a powdery substance, slurry, melt, and/or dough through a die system using elevated pressure and heat;
- drying said extruded pellets from the extruder (1) by subjecting the received extruded pellet to drying by air thereby providing exhaust air (4) carrying the water removed from the pellets during the drying process;
- exchanging heat between the exhaust air and cooling fluid (5) to condense water vapour in the exhaust air thereby providing a condensate (6),
- feeding said condensate (6) to said powdery substance, slurry, melt, and/or dough prior to extrusion.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

The present invention and in particular preferred embodiments thereof will now be described in more detail with regard to the accompanying figures. The figures show ways of implementing the present invention and are not to be construed as being limiting to other possible embodiments falling within the scope of the attached claim set.
Figure 1 schematically illustrates a typical example on known a production method,
Figure 2 schematically illustrate a first embodiment according to the present invention,
Figure 3 schematically illustrated a second embodiment according to the present invention, and
Figure 4 schematically illustrates a third embodiment according to the present invention.

### DETAILED DESCRIPTION OF AN EMBODIMENT

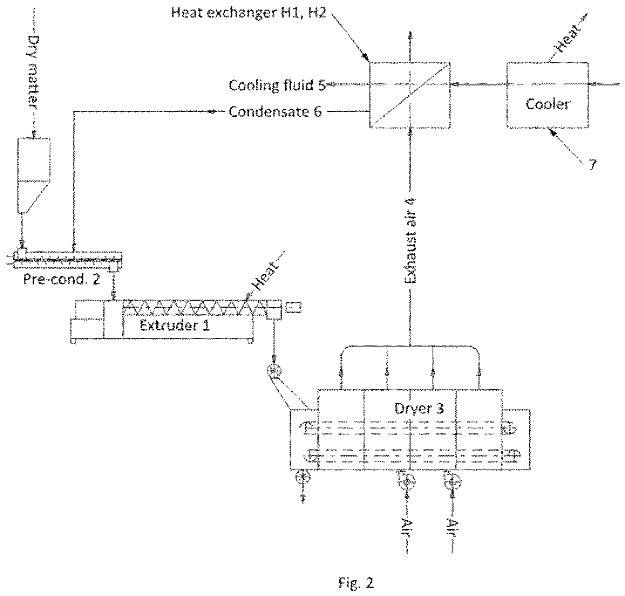

Reference is made to fig. 2 schematically illustrating a first embodiment of an apparatus for preventing heavy metal addition by addition of liquid water to powdery substance to be extruded into feed pellets. As illustrated, the apparatus has an extruder 1 which receives powdery substances illustrated in fig. 1 as "dry matter". The extruder 1 is a typically, well known extruder which extrude the powdery substance with a die system using elevated pressure and heat.

As illustrated in fig. 2, the dry matter is mixed with a condensate 6, being liquid water (which will be disclosed in greater details below). Fig. 2 also illustrates an optional pre-conditioner which in terms of process steps is arranged immediately upstream of the extruder 1 and downstream of the mixing between condensate and dry matter (mixing is illustrated by the trapeze shaped element in fig. 2).

Once pellets are formed by the extruder, they are arranged in a dryer 3 which is arranged to receive extruded pellets from the extruder 1. The dryer 3 is configured for subjecting the received extruded pellet to drying by air. The dryer 3 may be so configured by comprising blower to blow air through a bed of pellets and/or as illustrated in fig. 2, by the pellets be transported on a conveyer belt allowing air to pass through the conveyer belts and the bed of pellets. Often the air used to dry is heated atmospheric air and since the temperature of the pellets leaving the extruder 3 is higher than the ambient air, a cooling is provided of the pellets by contact with the air and a heated exhaust air 4 carrying the water removed from the pellets during the drying process is produced.

The exhaust air 4 represents a source of liquid, which liquid is condensed out by the apparatus comprising a heat exchanger system H1, H2. As illustrated in fig. 2, the heat exchanger system H1, H2 is arranged to receive the exhaust air 4 and a cooling fluid 5, where the temperature of the cooling fluid 5 is lower than the temperatures of the exhaust air 4 and also lower than the dew point of the exhaust air 4. The heat exchanger system H1, H2 is configured to exchange heat between the exhaust air 4 and the cooling fluid 5 to condense water vapour in the exhaust air thereby providing a condensate (6). This may be accomplished by a plate heat exchanger.

In order to assure that the cooling fluid 5 is sufficiently cold to accomplish a condensate from the exhaust air 4, the apparatus comprising a cooling device 7 configured to cool said cooling fluid 5 by exchanging heat with air from the surroundings. The cooling device 7 is typically in the form of heat exchanger being arranged to cool the cooling fluid prior to being received by the heat exchanger system (H1, H2). It is noted that if the cooling fluid 5 is available with a sufficiently low temperature, e.g. from sea water or fresh water supply, the cooling device 7 may be dispensed with.

In other embodiments, the cooling fluid 5 originate e.g. from a river, the sea or other sources including tap water, where the cooling fluid 5 has a temperature sufficiently low to provide the condensate 6.

A fluid connection is provided in the apparatus for feeding the condensate 6 to the powdery substance prior to extrusion. This fluid connection is preferably a pipe connecting a receptacle 8 to the point at the extruder 1 where the condensate is mixed with the dry matter. In the embodiment of fig. 2, the receptacle is illustrated to be located inside the heat exchanger system H1, H2 and the receptacle is in the form of an open ended container located inside the otherwise closed heat exchanger where the open end faces upward so at to collect the out condensed water as a condensate falling downwardly into the receptacle 8.

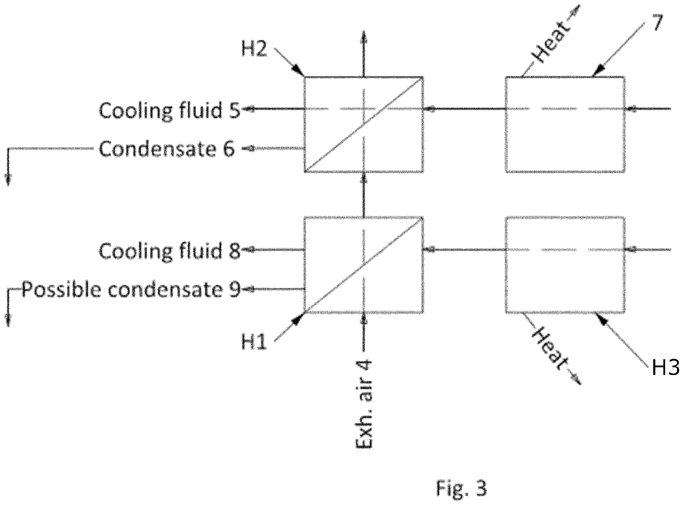

Reference is made to fig. 3 schematically illustrating a second embodiment of an apparatus according to the present invention. Fig. 2 illustrate in particular a preferred embodiment of the heat exchanger system H1, H2. As illustrated, the heat exchanger system H1, H2 comprising a first heat exchanger H1 and a second heat exchanger H2. Although the two heat exchangers are illustrated as separate heat exchangers, they may be incorporated into a single unit.

The two heat exchangers H1 and H2 are arranged so as to step-wise cool the exhaust air 4 where the first heat exchanger H1 cools the exhaust air 4 without condensation (or substantially no out condensation) and where the condensation is carried out by the second heat exchanger H2.

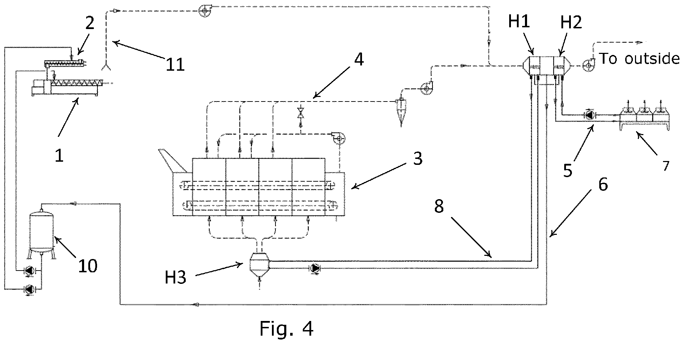

This is accomplished by the first heat exchanger H1 is arranged to receive and cool the exhaust air 4 to sub-saturated condition by exchanging heat with the cooling fluid 8. As in the embodiment of fig. 2, the cooling fluid 8 is cooled by use of the surrounding air by the heat exchanger H3. As shown in fig. 4, the cooling fluid 8 is cooled by heating the air to the dryer 3; however other possibilities exist within the scope of the invention to cool the cooling fluid 8 e.g. by heat exchange with the surrounding air.

Once the exhaust air 4 has been cooled by the first heat exchanger H1, the exhaust air 4 is cooled by the second heat H2 exchanger which is arranged to receive the exhaust air 4 from the first heat exchanger H1 and cool the exhaust air 4 to below its dew point to condense water contained in said exhaust air 4 to provide said condensate stream 6 by exchanging heat with said cooling fluid 5.

As shown in fig. 3, the second heat exchanger H2 cools the exhaust air 4 by use a cooling fluid 5 which may be the same cooling fluid 5 as used by the first heat exchanger H1, or as will be disclosed in greater details below (e.g. in relation to fig. 4).

In some preferred embodiments of the apparatus, the apparatus further comprises a dry cooler, wet cooler, a heat pump or a combination thereof to provide the cooling effect by the second heat exchanger H2. Thus, the cooling fluid 3 shown in fig. 3 is conceptually replaced by a cooling effect provided by the dry cooler, wet cooler, heat pump or the combination thereof.

Although it may be preferred that the heat exchanger system H1, H2 are separate heat exchangers, is may be advantageous to embody the heat exchanger system H1, H2 as a single heat exchanger configured for cooling the exhaust air to below its dew point during its passage through the heat exchanger and condense an amount of water as condensate.

According to several aspects of the invention, the dimensioning of the apparatus are provided so that the condensate provided is the only liquid water added to said powdery substance prior to extrusion. While the condensate in some embodiments is the only liquid water added the powdery substance, slurry melt and/or dough, in some other embodiments, water may be added from another source, such as tap water, steam (as e.g. disclosed herein) as a supplement of water. As will become apparent e.g. from the examples below, the dimensioning of the apparatus relates inter alia to the dimensioning of the cooling capacity of the heat exchangers so as to provide sufficiently cooling of the exhaust air to provide sufficient amount of condensate.

In many instances, the cooling capacity is at least partially provided by heat exchanging with surroundings and since the temperature of the surroundings varies over time both on short time scale e.g. during a 24 hours production and on larger time scale e.g. one year, the cooling capacity and thereby the amount of condensate may vary accordingly. To account for such variations in production of condensate, the apparatus may further comprise a buffer tank (10) in which the condensate is stored until being fed to the powdery substance. This may be utilized by the cooling capacity and thereby the production of condensate may be higher during night time (compared to during day time), so that an production surplus of condensate during night time may be stored in the buffer tank 10 to be used during day time production. In some preferred embodiments, the buffer tank may have storing capacity in the order of 50 m³.

The buffer tank 10 is typically used in manner where an instantaneous surplus of condensate is stored in the buffer tank 10, and instance deficit of water to be added to the powdery substance is taken from the buffer tank 10. By deficit is typically meant that the production of condensate is less than what is required to be added to the powdery substance and surplus typically refers to that the amount of condensate produced is higher than what is required. Such a buffer tank 10 is illustrated in fig. 4, the content of which will be detailed below.

When pellets are extruded by an extruder, the pellets when leaving the die is exposed to atmospheric conditions. This results in a flash-off 11 air stream carrying water which may be harvested and used as a condensate. To this, the heat exchanger system H1, H2 is further arranged to receive said flash-off stream together with said exhaust air 4 and the condensate 6 provided thereby contains condensed water originating from the exhaust air 4 and the flash-off stream.

In some regions, the cooling capacity of e.g. the thermodynamic properties of the air surrounding the apparatus does not allow for sufficient cooling capacity to cool the cooling fluid 5 by heat exchange with the surroundings. In such situations, the apparatus may include a heat pump which either provided the cooling effect either alone or in combination with a liquid to air heat exchanger forming the cooling device 7.

In some embodiments, the heat exchanger system H1, H2 provides a surplus of heat, where surplus of heat refers to heat that advantageously may be used in the apparatus. In such instances, the apparatus may comprise a further heat exchanger H3 in which the surplus of heat, if present, produced by the heat exchanger system H1, H2 is used to heat make-up air to the dryer 3, to heat the condensate 6 prior to be fed to the powdery substance, liquid contained tanks and/or domestic heating. When used to heat make-up air to the dryer 3, the apparatus further comprising a third heat exchanger H3 receiving cooling fluid 8 (see e.g. fig. 4)

As disclosed herein, some embodiments of the apparatus may further comprise a preconditioner 2 which is used to preheat the powdery substance by steam prior to be extruded. The apparatus may further comprise a boiler for heating water, preferably being actively freed from heavy metals, to produce said steam for preheating the powdery substance in the preconditioner 2.

Reference is made to fig. 4, schematically illustrating a third embodiment according to the present invention. Similar numerals as used in the foregoing figures are used in fig. 4 for similar elements.

As illustrated in fig. 4, the apparatus comprising an extruder 1 with a preconditioner 2. A heat exchanger system H1, H2 is present and receives exhaust air 4 as well as flash-off air 9. In the heat exchanger system H1, H2, the air is cooled to below is dew point thereby providing condensate 6. In the embodiment shown in fig. 4, one condensate stream 6 is provided and depending on the operation of the apparatus, a condensate 9 may be produced by the first heat exchanger H1 (illustrated in fig. 1 as "possible condensate 9") Such two condensates may be mixed into a single condensate.

The apparatus shown in fig. 4 further comprising the cooling device 7 which is an liquid to air cooler cooling the cooling fluid by the surround air.

While the above disclosure has been focused towards an apparatus, the following disclosure relates to method for preventing heavy metal addition by addition of liquid water to powdery substance to be extruded into feed or food pellets according to the present invention

In such methods, pellets are formed by extruding a powdery substance through a die system using elevated pressure and heat, where after the extruded pellets are dried by subjecting the received extruded pellet to drying by air thereby providing exhaust air 4 carrying the water removed from the pellets during the drying process.

The method also includes exchanging heat between the exhaust air and cooling fluid 5 to condense water vapour in the exhaust air thereby providing a condensate 6 and feeding the condensate 6 to said powdery substance prior to extrusion.

Preferably, the method also comprising cooling the cooling fluid 5 by exchanging heat with air from the surroundings.

In a further embodiment, the method comprising
- a first step of cooling the exhaust air to sub-saturated condition by heat exchanging with a cooling fluid 8;
- a second step, subsequent to the first step, of cooling the exhaust air 4 to below its dew point to condense water contained in said exhaust air 4, by exchanging heat with said cooling fluid 5.

In still further embodiments, the condensate provided is the only liquid water added to said powdery substance prior to extrusion.

In still further embodiments, an instantaneous surplus of condensate is stored in said buffer tank 10, and instance deficit of water to be added to the powdery substance is taken from the buffer tank 10.

In still further embodiments, the pellets being exposed after extrusion to atmospheric conditions results in a flash-off 11 air stream carrying water, and wherein said flash-off 11 stream together with said exhaust air 4 is cooled to provide a condensate 6.

### Example 1

With reference to fig. 4, specific design parameters will now be discussed in details.

In some geographic areas, it will be necessary to assist the cooling system 7 with a heat pump, to get the right amount of condensate to the process.

The following three tables, illustrating process parameters for three different operational set-ups. WAD is Water At Die, that is the water content of the matter to the extruded through the die. Min Steam is the minimum amount of steam in kg to be added to the extruder (it is noted that a boiler is not shown in fig. 4). The percentage of steam "Steam %" and water "Water %" are given with reference to the amount of dry matter introduced into the extruder, that is respectively kg steam / kg dry matter *100% and kg water / kg dry matter*100%.

| | | | | | | | | | | |
|---|---|---|---|---|---|---|---|---|---|---|
| WAD % | 20 | | | WAD % | 25 | | | WAD % | 30 | |
| Min 20% Steam | | | | Min 20% Steam | | | | Min 20% Steam | | |
| Min Steam | 3,0 | | | Min Steam | 4,54 | | | Min Steam | 6,3 | |
| Steam% | Water % | W/S Ratio | | Steam% | Water % | W/S Ratio | | Steam% | Water % | W/S Ratio |
| 0 | 15 | | | 0 | 22,7 | | | 0 | 31,5 | |
| 1 | 14 | | | 1 | 21,7 | | | 1 | 30,5 | |
| 2 | 13 | | | 2 | 20,7 | | | 2 | 29,5 | |
| 3 | 12 | | | 3 | 19,7 | | | 3 | 28,5 | |
| 4 | 11 | 2,8 | | 4 | 18,7 | | | 4 | 27,5 | |
| 5 | 10 | 2,0 | | 5 | 17,7 | 3,5 | | 5 | 26,5 | |
| 6 | 9 | 1,5 | | 6 | 16,7 | 2,8 | | 6 | 25,5 | |
| 7 | 8 | 1,1 | | 7 | 15,7 | 2,2 | | 7 | 24,5 | 3,5 |
| 8 | 7 | 0,9 | | 8 | 14,7 | 1,8 | | 8 | 23,5 | 2,9 |
| 9 | 6 | 0,7 | | 9 | 13,7 | 1,5 | | 9 | 22,5 | 2,5 |
| 10 | 5 | 0,5 | | 10 | 12,7 | 1,3 | | 10 | 21,5 | 2,2 |
| 11 | 4 | 0,4 | | 11 | 11,7 | 1,1 | | 11 | 20,5 | 1,9 |
| 12 | 3 | 0,3 | | 12 | 10,7 | 0,9 | | 12 | 19,5 | 1,6 |
| 13 | 2 | 0,2 | | 13 | 9,7 | 0,7 | | 13 | 18,5 | 1,4 |
| 14 | 1 | 0,1 | | 14 | 8,7 | 0,6 | | 14 | 17,5 | 1,3 |
| 15 | 0 | 0 | | 15 | 7,7 | 0,5 | | 15 | 16,5 | 1,1 |
| 16 | | | | 16 | 6,7 | | | 16 | 15,5 | |
| 17 | | | | 17 | 5,7 | | | 17 | 14,5 | |
| 18 | | | | 18 | 4,7 | | | 18 | 13,5 | |
| 19 | | | | 19 | 3,7 | | | 19 | 12,5 | |
| 20 | | | | 20 | 2,7 | | | 20 | 11,5 | |
| 21 | | | | 21 | 1,7 | | | 21 | 10,5 | |
| 22 | | | | 22 | 0,7 | | | 22 | 9,5 | |
| 23 | | | | 23 | | | | 23 | 8,5 | |
| 24 | | | | 24 | | | | 24 | 7,5 | |

As indicated in the tables, the boxed cells represent particular advantageous embodiments.

During the extrusion, steam is added to the extrusion system in an amount of: 4% - 15% kg steam/kg dry matter of the incoming dry meal to the extruder.

Water which is the condensate produced is added to the extrusion system in an amount of: 1% - 24.5%. And the resulting water to steam ratio is: 0.1-3.5.

As an example, the following numbers are provided.
- Mass balance example for WAD: 20%
- Water: 7% dry meal into extruder
- Steam: 8% dry meal into extruder

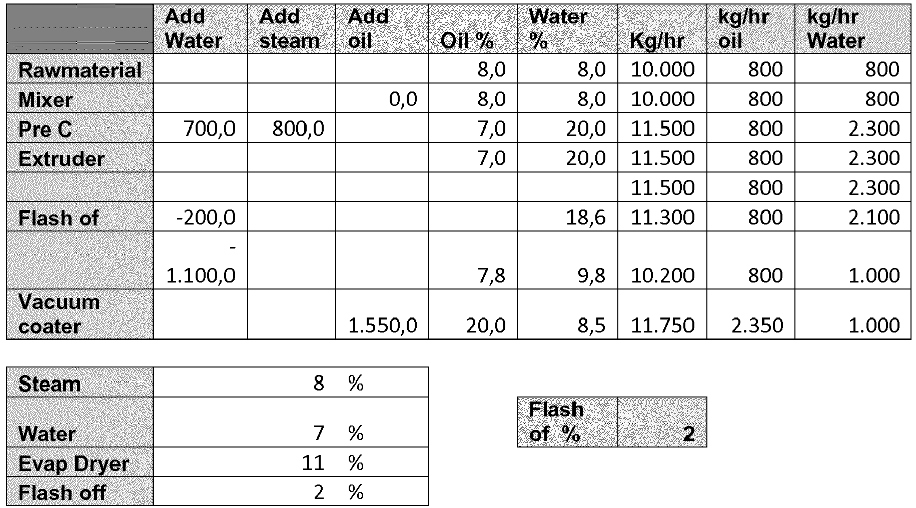

The process parameters are:
- Air out of dryer: Temperature: 80 °C
- Absolute humidity: 85 g/kg dry air
- Air flow out of dryer: 16.740 m3/hr
- Ambient temperature: 15 °C with 70% RH
- Air out H1 & H2: 32 °C with 99% RH

H1 and H2 are connected to a dry cooler 7

H1 and H2 will give 794 kg condensate 6 and the liquid water need to the extruder will in this case be substituted by condensate.

If the ambient temperature in this case is higher than 19 °C it will be necessary to add other cooling devices to the process. The other cooling devices could be wet cooling towers, air chiller or heat pumps.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference symbols used:

- 1: Extruder
- 2: Preconditioner
- 3: Dryer
- 4: Exhaust air
- 5: Cooling fluid
- 6: Condensate
- 7: Cooling device
- 8: Cooling fluid
- 9: Possible condensate
- 10: Buffer tank
- 11: Flash-off
- H1: Heat exchanger
- H2: Heat exchanger
- H3: Heat exchanger
- H1, H2: Heat exchanger system

## Claims

1. An apparatus for preventing heavy metal addition by addition of liquid water to powdery substance, slurry, melt, and/or dough to be extruded into feed and/or food pellets, the apparatus comprises:
- an extruder (1) forming pellets by extruding a powdery substance, a slurry, a melt, and/or dough through a die system using elevated pressure and heat;
- a dryer (3) arranged to receive extruded pellets from the extruder (1) and configured for subjecting the received extruded pellet to drying by air thereby providing exhaust air (4) carrying the water removed from the pellets during the drying process;
- a heat exchanger system (H1, H2) arranged to receive
- said exhaust air (4)
- a cooling fluid (5)
and being configured to exchange heat between the exhaust air and the cooling fluid (5) to condense water vapour in the exhaust air thereby providing a condensate (6),
- a fluid connection for feeding said condensate (6) to said powdery substance, slurry, melt, and/or dough prior to and/or during extrusion.

2. An apparatus according to claim 1, further comprising a cooling device (7) configured to cool said cooling fluid (5) by exchanging heat with chilled air and/or air from the surroundings, said cooling device (7) being arranged to cool said cooling fluid prior to being received by the heat exchanger (H1, H2).

3. An apparatus according to claim 1 or 2, wherein said heat exchanger system (H1, H2) comprising a first heat exchanger (H1) and a second heat exchanger (H2), wherein
- said first heat exchanger (H1) is arranged to receive and cool the exhaust air to sub-saturated condition by exchanging heat with a cooling fluid (8);
- said second heat exchanger (H2) is arranged to receive the exhaust air (4) received from the first heat exchanger (H1) and cool the exhaust air (4) to below its dew point to condense water contained in said exhaust air (4) to provide said condensate stream, by exchanging heat with said cooling fluid (5).

4. An apparatus according to claim 3, wherein the apparatus further comprising a dry cooler, wet cooler, a heat pump or a combination thereof to provide the cooling effect by the second heat exchanger (H2).

5. An apparatus according to any of the preceding claims, wherein the heat exchanger system (H1, H2) is a single heat exchanger configured for cooling the exhaust air to below its dew point during its passage through the heat exchanger and condense an amount of water as condensate.

6. An apparatus according to any of the preceding claims, wherein the condensate provided is the only liquid water added to said powdery substance, slurry, melt, and/or dough prior to extrusion.

7. An apparatus according to any of the preceding claims, the apparatus further comprising a buffer tank (10) in which the condensate is stored until being fed to the powdery substance, slurry, melt, and/or dough.

8. An apparatus according to claim 7, wherein an instantaneous surplus of condensate is stored in said buffer tank (10), and instance deficit of water to be added to the powdery substance, slurry, melt, and/or dough is taken from the buffer tank (10).

9. An apparatus according to any of the preceding claims, wherein said pellets being exposed after extrusion to atmospheric conditions resulting in a flash-off (11) air stream carrying water, and wherein the heat exchanger system (H1, H2) is further arranged to receive said flash-off (11) stream together with said exhaust air (4).

10. An apparatus according to any of the preceding claims, wherein the cooling device (7) is or further comprises a heat pump.

11. An apparatus according to any of the preceding claims, further comprising a further heat exchanger (H3) in which a surplus of heat, if present, produced by the heat exchanger system (H1, H2) or a heat exchanger system according to claim 5 is used to heat make-up air to the dryer (3), to heat the condensate prior to be fed to the powdery substance, slurry, melt, and/or dough, liquid contained tanks and/or domestic heating.

12. An apparatus according to any of the preceding claims, wherein the apparatus further comprising a preconditioner (2) preheating the powdery substance, slurry, melt, and/or dough by steam prior to be extruded.

13. An apparatus according to 12, further comprising a boiler for heating water, preferably being water from which heavy metals are removed, to produce said steam for preheating the powdery substance, slurry, melt, and/or dough in the preconditioner (2).

14. A method for preventing heavy metal addition by addition of liquid water to powdery substance, slurry, melt, and/or dough to be extruded into feed or food pellets, the method comprises:
- forming pellet by extruding a powdery substance, slurry, melt, and/or dough through a die system using elevated pressure and heat;
- drying said extruded pellets from the extruder (1) by subjecting the received extruded pellet to drying by air thereby providing exhaust air (4) carrying the water removed from the pellets during the drying process;
- exchanging heat between the exhaust air and cooling fluid (5) to condense water vapour in the exhaust air thereby providing a condensate (6),
- feeding said condensate (6) to said powdery substance, slurry, melt, and/or dough prior to and/or during extrusion.

15. A method according to claim 14, comprising cooling said cooling fluid (5) by exchanging heat with chilled air and/or air from the surroundings.

16. A method to claim 14 or 15, the method comprising:
- a first step of cooling the exhaust air to sub-saturated condition by heat exchanging with a cooling fluid (8);
- a second step, subsequent to the first step, of cooling the exhaust air (4) to below its dew point to condense water contained in said exhaust air (4), by exchanging heat with said cooling fluid (5).

17. A method according to any of the preceding claims 14-16 the condensate provided is the only liquid water added to said powdery substance, slurry, melt, and/or dough prior to extrusion.

18. A method according to any of the preceding claims 14-17, wherein an instantaneous surplus of condensate is stored in said buffer tank (10), and instance deficit of water to be added to the powdery substance, slurry, melt, and/or dough is taken from the buffer tank (10).

19. A method according to any of the preceding claims 14-18, wherein said pellets being exposed after extrusion to atmospheric conditions resulting in a flash-off (11) air stream carrying water, and wherein said flash-off (11) stream together with said exhaust air (4) is cooled to provide a condensate (6).
